# EUROPÄISCHE PATENTSCHRIFT

(11) **EP 1 825 231 B1**
(45) Veröffentlichungstag und Bekanntmachung des Hinweises auf die Patenterteilung: **26.02.2020**
(21) Anmeldenummer: 05850422.6
(22) Anmeldetag: 29.11.2005
(51) Int. Cl.: G01F 23/284

(54) **VORRICHTUNG ZUR BESTIMMUNG UND/ODER ÜBERWACHUNG DER PROZESSGRÖßE FÜLLSTAND EINES FÜLLGUTS IN EINEM BEHÄLTER**
DEVICE FOR DETERMINING AND/OR MONITORING THE FILL-LEVEL PROCESS VARIABLE OF A SUBSTANCE IN A CONTAINER
DISPOSITIF POUR DETERMINER ET/OU SURVEILLER LA DONNEE DE PROCESSUS NIVEAU DE REMPLISSAGE D'UN PRODUIT DANS UN CONTENANT

(30) Priorität: 13.12.2004 DE 102004060119
(43) Veröffentlichungstag der Anmeldung: 29.08.2007
(73) Patentinhaber: Endress+Hauser SE+Co. KG, 79689 Maulburg (DE)
(72) Erfinder: SCHROTH, Herbert, 79650 Schopfheim (DE)
(74) Vertreter: Andres, Angelika Maria
(86) Internationale Anmeldenummer: PCT/EP2005/056325
(87) Internationale Veröffentlichungsnummer: WO 2006/063929

(56) Entgegenhaltungen:
- EP-A- 0 780 664
- WO-A-2004/065799
- US-A- 3 477 290
- US-B1- 6 178 817

## Beschreibung

Die Erfindung betrifft eine Vorrichtung zur Bestimmung und/oder Überwachung der Prozessgröße Füllstand eines Füllguts in einem Behälter.

Zur Detektion des Füllstands von Flüssigkeiten oder Schüttgütern in Behältern werden in zunehmendem Maße TDR-Messgeräte eingesetzt. Bei der TDR-Messmethode werden elektromagnetische Hochfrequenzpulse oder kontinuierliche Mikrowellen entlang eines leitfähigen Elements in den Behälter hinein- bzw. aus dem Behälter herausgeführt. Bei dem leitfähigen Element handelt es sich z.B. um eine Stab- oder eine Seilsonde.

Physikalisch gesehen wird bei der TDR-Messmethode der Effekt ausgenutzt, daß an der Grenzfläche von zwei unterschiedlichen Medien, z. B. Luft und Öl oder Luft und Wasser, infolge der sprunghaften Änderung (Diskontinuität) der Dielektrizitätszahlen beider Medien ein Teil der geführten elektromagnetischen Hochfrequenzpulse bzw. Mikrowellen reflektiert und über das leitfähige Element zurück in eine Empfangsvorrichtung geleitet wird. Der reflektierte Anteil der elektromagnetischen Hochfrequenzpulse bzw. Mikrowellen ist dabei um so größer, je unterschiedlicher die Dielektrizitätszahlen der beiden Medien sind. Anhand der Laufzeit der Pulse oder Wellen läßt sich die Entfernung zur Grenzfläche bestimmen. Bei Kenntnis der Leerdistanz des Behälters kann nachfolgend der Füllstand des Füllguts in dem Behälter berechnet werden.

TDR-Messgeräte mit geführten hochfrequenten Messsignalen (Pulse oder Wellen) zeichnen sich gegenüber Messgeräten, bei denen die Messsignale frei abgestrahlt werden, durch eine geringe Signal-Dämpfung aus. Grund hierfür ist, daß der Leistungsfluss ganz gezielt entlang der Stab- oder Seilsonde bzw. des leitfähigen Elements erfolgt. Weiterhin haben die TDR-Messgeräte auch bei kleinen Messbereichen eine hohe Messgüte, da sie im Vergleich zu freiabstrahlenden Mikrowellen-Messgeräten eine größere Signalbandbreite aufweisen und damit eine bessere Trennschärfe zwischen Nutz- und Störsignalen erreichen. Ein weiterer Vorteil von TDR-Messgeräten liegt in der hohen Sicherheit und Zuverlässigkeit der Füllstandsmessung. Dies rührt daher, daß die Messung mit geführten Messsignalen relativ unabhängig ist von den Produkteigenschaften des Füllguts, der Behälterkonstruktion (z.B. Werkstoffe, Geometrie) oder sonstigen Betriebsbedingungen (z.B. Staub, Ansatz).

Darüber hinaus ist es bekannt geworden, den Füllstand eines Füllguts in einem Behälter mittels eines kapazitiven Füllstandsmessgeräts zu bestimmen. Auch hier erstreckt sich ein leitfähiges Element in den Behälter hinein. Dieses leitfähige Element wird über eine Signalquelle mit einem Wechselspannungssignal beaufschlagt. Über eine Mess-/Auswerteschaltung wird die aktuelle Messkapazität ermittelt und mit einem vorgegebenen Kapazitäts-Sollwert verglichen. Anhand dieser Daten wird der Füllstand des Füllguts bestimmt.

Bei kapazitiven Verfahren zur Bestimmung des Füllstandes eines Füllguts in einem Behälter bilden kapazitive Sonde und Behälterwand die Elektroden eines Kondensators. Falls die Behälterwand nicht leitfähig ist, muß eine separate zweite Elektrode innerhalb oder außerhalb des Behälters vorgesehen sein. Zwischen den beiden Elektroden befindet sich - je nach Füllstand des Mediums in dem Behälter - entweder die gasförmige Behälteratmosphäre oder das Füllgut, was sich aufgrund der unterschiedlichen Dielektrizitätszahlen beider Substanzen in einer Änderung der Messkapazität niederschlägt. Die Messkapazität zeigt somit eine Abhängigkeit von dem jeweiligen Füllstand des Füllguts in dem Behälter. Kapazitive Sonden lassen sich sowohl bei der Grenzstanddetektion als auch bei einer kontinuierliche Füllstandsbestimmung einsetzen. Darüber hinaus gehören auch konduktive Füllstands-Messgeräte zum Stand der Technik.

Vorrichtungen der zuvor genannten Art werden im Bereich der Pharma- und Lebensmittelindustrie, in der chemischen Industrie, der Galvanik und ähnlichen Industrien vielfältig eingesetzt und müssen dort gleichzeitig unterschiedlichsten Anforderungen genügen.

Die produktberührenden Teile dieser Vorrichtungen unterliegen in der Regel einem beträchtlichen Verschleiß, beispielsweise durch Korrosion, Abrasion, Versprödung, Härtezunahme, Oberflächenrissbildung oder sonstiger Alterung. Es ist daher von großem Vorteil, wenn die einzelnen verschleißenden Teile tauschbar sind, ohne jeweils die komplette Messsonde austauschen zu müssen.

Kommen diese Vorrichtungen in Kontakt mit den Nahrungsmitteln bzw. pharmazeutischen Produkten, so müssen Sie aus verständlichen Gründen darüber hinaus höchsten Hygiene-Anforderungen genügen. Die Hygiene-Anforderungen an die meßtechnischen Vorrichtungen werden von Normenausschüssen formuliert. Beispielhaft sei in diesem Zusammenhang die Europäische Norm EN 1672-2:1997 genannt, die den Status einer nationalen Deutschen Norm hat. Diese Norm ergänzt die allgemein gültigen wesentlichen Sicherheits- und Gesundheitsanforderungen der EG-Maschinenrichtlinie 89/392/EWG des Europäischen Rates durch detaillierte Anforderungen für Maschinen, die in der Nahrungs- und Lebensmittelindustrie eingesetzt werden. Diesen Normen gleichzusetzen ist der Stand der Technik, der in Form von Richtlinien von Expertengruppen wie der "European Hygienic Equipment Design Group" als "EHEDG guidelines" oder der "American Society of Mechanical Engineers" als "ASME-BPE" herausgegeben wird. In diesen Normen und Richtlinien spielt die Reinigbarkeit eine zentrale Rolle, da sie essentiell ist für die Vermeidung gesundheitsgefährdender Keime.

Potentielle Sammelbecken für gesundheitsgefährdende Keime finden sich bevorzugt in Bereichen, in denen zwei Teilkomponenten einer Messvorrichtung lösbar miteinander verbunden sind. Besonders kritisch sind relativ schmale und klein dimensionierte Zwischenräume. Ein kritischer Kontaktbereich ist beispielsweise dort, wo das leitfähige Element an dem Messgerät befestigt ist. Befindet sich in dem Kontaktbereich von leitfähigem Element und Messgerät ein Spalt, so kann Füllgut in diesen Spalt eindringen und sich dort festsetzen. Schmale Spalte lassen sich bekannter Weise nicht oder nur unzureichend gründlich reinigen. Ein weiteres Problem bei Spalten ist die Neigung zu Spaltkorrosion, so dass unabhängig von den hygienischen Anforderungen mit dem Füllgut in Berührung kommende Spalte möglichst vermieden werden müssen.

Um dieses Problem zu vermeiden, ist es bekannt geworden, mit Kunststoff (z.B. PTFE) vollisolierte Sonden herzustellen. Diese vollisolierten Sonden sind für hygienische Anwendungen sehr gut geeignet, da hier auf Spalte, die mit dem Füllgut in Kontakt kommen, vollständig verzichtet wird. Jedoch sind diese vollisolierten Sonden teuer und empfindlich gegen mechanische Beschädigung.

Im Gegensatz hierzu ist es auch bekannt, die Sonde mittels eines Schneidgewindes zu befestigen. Dies ist in der Veröffentlichungsschrift WO 2004/065799 A2 gezeigt.

Aus den Druckschriften US 6,178,817 B1 und US 3, 477,290 A sind außerdem Füllstandsmesgeräte bekannt, die mittels radial dichtenden O-Ringen abgedichtet werden.

Darüber hinaus sind, wie in EP 0780664A2 beschrieben, auch Konusdichtungen bekannt geworden, bei denen ein isolierendes Material in der Durchführung zwischen dem leitfähigen Element und dem Gehäuse angeordnet ist. Allerdings sind derartige Konusdichtungen nicht dauerhaft dicht und spaltfrei. Gleiches gilt übrigens für Konusdichtungen zwischen dem Isolator und einem metallischen Adapter, der als Prozess-anschluss dient. Darüber hinaus sind solche Konstruktionen nur mit großem Aufwand zum Austausch einzelner Teile demontierbar, da komplizierte Federmechanismen zum Nachspannen der Konen verwendet werden müssen.

Der Erfindung liegt deshalb die Aufgabe zugrunde, ein Messgerät vorzuschlagen, das einerseits keine Spalte aufweist und damit hohen hygienischen Anforderungen genügt bzw. wenig anfällig ist gegenüber Spaltkorrosion, gleichzeitig aber zum Austausch einzelner Teile demontiert werden kann.

Die Aufgabe wird gelöst durch ein Füllstandsmessgerät zur Bestimmung und/oder Überwachung der Prozessgröße Füllstand eines Füllguts in einem Behälter, umfassend:
- ein Gehäuseteil mit einem Innenraum, wobei das Gehäuseteil an dem Behälter befestigbar ist,
- ein leitfähiges Element, das sich im montierten Zustand in den Behälter hineinerstreckt und das mit dem Gehäuseteil über eine lösbare und wiederverschließbare Verbindung gekoppelt ist, wobei die lösbare Verbindung im Innenraum angeordnet ist,
- ein Isolationselement, welches in einem definierten Bereich zwischen dem leitfähigen Element und dem Gehäuseteil angeordnet ist,
- eine erste Prozessdichtung, und
- eine zweite Prozessdichtung.

Dabei sind die erste Prozessdichtung zum Füllgut hin derart frontbündig zwischen dem Gehäuseteil und dem Isolationselement, und die zweite Prozessdichtung zum Füllgut hin derart frontbündig zwischen dem Isolationselement und dem leitfähigen Element angeordnet, dass der Innenraum zum Füllgut hin spaltfrei abgedichtet ist.Das erfindungsgemäße Füllstandsmessgerät ermittelt den Füllstand des Füllguts über ein kapazitives Messverfahren oder über ein konduktives Messverfahren oder über die Laufzeit von an dem leitfähigen Element entlang geführten hochfrequenten Messsignalen.

Bevorzugt handelt es sich bei der lösbaren Verbindung um eine Schraubverbindung oder um eine Steckverbindung. Da sich die Verbindung zwischen dem leitfähigen Element und dem Gehäuseteil im Innenraum des Gehäuseteils befindet, ist der Verbindungsbereich, der für Korrosion besonders anfällig ist, nicht mehr in direktem Kontakt mit dem Füllgut, wodurch die Korrosionsanfälligkeit erheblich eingeschränkt wird.

Das Isolationselement besteht beispielsweise aus einem isolierenden Kunststoffmaterial (z.B. PEEK, das sich durch eine hohe mechanische und chemische Stabilität auszeichnet) oder aus Keramik. In diesem Zusammenhang ist zu erwähnen, dass Keramik aufgrund ihrer hohen Dielektrizitätszahl für den Einsatz bei einem TDR-Messgerät nur bedingt einsetzbar ist.

Gemäß der erfindungsgemäßen Vorrichtung ist die erste Prozessdichtung so ausgestaltet und angeordnet, dass sie das Gehäuseteil im wesentlichen frontbündig gegen das Isolations-element spaltfrei abdichtet, wobei die zweite Prozessdichtung so ausgestaltet und angeordnet ist, dass sie das Isolationselement im wesentlichen frontbündig gegen das leitfähige Element spaltfrei abdichtet. Wahlweise kann das dielektrische Isolationselement auch eine äußere Dichtkontur aufweisen, mit der es dichtend an einem mit dem Behälter verbundenen Gegenstück befestigt werden kann. Als Beispiel sei an dieser Stelle die von der Anmelderin vertriebenen Prozessarmaturen nach ISO 2852 oder DIN 11864-1 genannt. Wird eine derartige Ausgestaltung des Prozessanschlusses verwendet, so lässt sich die äußere Prozessdichtung einsparen. Der Nachteil bei der Verwendung eines speziellen, für bestimmte Dichtkonturen ausgelegten Prozessanschlusses ist jedoch, dass nicht jeder anderweitige Prozessanschluss nachfolgend an das Gehäuseteil adaptierbar ist. Daher gehen mit einer derart speziellen Lösung die Vorzüge des beliebigen modularen Aufbaus des Messgeräts verloren, wonach das Messgerät mit den verschiedensten Prozessanschlüssen an dem Behälter befestigbar ist.

Bevorzugt handelt es sich bei der ersten Prozessdichtung und der zweiten Prozessdichtung um jeweils einen O-Ring oder um eine Formdichtung. Als besonders vorteilhaft ist hierbei anzusehen, dass die Prozessdichtungen durch Lösen des leitfähigen Elements oder des Prozessanschlusses austauschbar sind. Um eine dauer-haft spaltfreie und dichte Verbindung zwischen den einzelnen Komponenten zu erreichen, werden die einzelnen Komponenten so miteinander verbunden, dass die Prozeßdichtungen mit einer definierten Vorspannung verpresst sind. Dazu werden an den zu verbindenden Teilen mechanische Anschläge vorgesehen, die die Vorspannung auf die Dichtungen begrenzen.

Wie bereits an vorhergehender Stelle erläutert, handelt es sich bei der erfindungsgemäßen Vorrichtung um ein Füllstandsmessgerät, das den Füllstand des Füllguts in dem Behälter über die Laufzeit von an dem leitfähigen Element entlang geführten hochfrequenten Messsignalen ermittelt, oder es handelt sich bei der Vorrichtung um ein Füllstandsmessgerät, das den Füllstand des Füllguts über ein kapazitives Messverfahren oder über ein konduktives Messverfahren ermittelt.

Gemäß einer vorteilhaften Weiterbildung der erfindungsgemäßen Vorrichtung ist an dem Gehäuseteil ein lösbares Befestigungsteil zur Befestigung des Füllstandsmessgeräts an dem Behälter vorgesehen. Bei dem Befestigungsteil kann es sich um einen beliebigen Prozessanschluss handeln.

Eine bevorzugte Ausgestaltung der erfindungsgemäßen Vorrichtung schlägt eine lösbare Steck- und/oder Schraubverbindung vor, über die ein Elektronikteil an das Füllstandsmessgerät angekoppelt ist. Bevorzugt ist die Steck- oder Schraubverbindung im gelösten Zustand wasserdicht verschließbar, z.B. durch eine O-Ring gedichtete Schraubkappe. Hierdurch ist es möglich, den Elektronikteil über die Steck- oder Schraubverbindung auf einfache Weise von dem Füllstandsmessgerät zu entkoppeln und bei Bedarf das Füllstandsmeßgerät im Autoklaven zu reinigen.

Die Erfindung wird anhand der nachfolgenden Figuren näher erläutert. Es zeigt:
- Fig. 1:: einen Querschnitt durch ein TDR-basiertes Füllstandsmessgerät, und
- Fig. 2:: einen Querschnitt durch eine erfindungs-gemäße Vorrichtung.

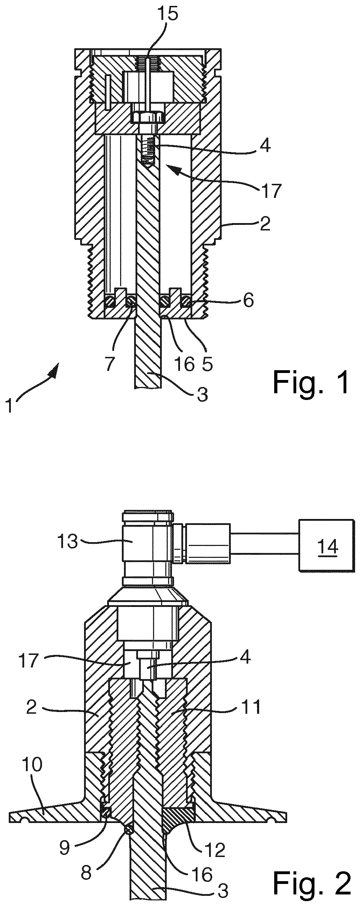

Fig. 1 zeigt einen Querschnitt durch ein Füllstandsmessgerät 1, das den Füllstand eines Füllguts in einem Behälter über ein TDR- Messverfahren oder über ein kapazitives oder konduktives Messverfahren ermittelt.

Das Füllstandsmessgerät 1 besteht, von der mechanischen Seite her betrachtet, aus einem Gehäuseteil 2 und einem leitfähigen Element 3. Das leitfähige Element 3 ist über eine lösbare Verbindung 4, die sich im Innenraum 17 des Gehäuseteils 2 befindet, mit dem Gehäuseteil 2 verbunden. Zum Prozess hin ist der Innenraum 17 des Gehäuseteils 2 mittels einer Isolationsscheibe 5 verschlossen. Die Isolationsscheibe 5 wird zum Prozess hin mittels eines an dem leitfähigen Element 3 vorgesehenen Anschlags 16 gesichert. Die Isolationsscheibe 5 ist über den O-Ring 7 gegen das leitfähige Element 3 abgedichtet; über den O-Ring 6 ist die Isolationsscheibe 5 gegen das Gehäuseteil 2 abgedichtet.

In dem vom Prozess abgewandten Gehäuseteil 2 befindet sich ein elektrischer Anschluss 15 für einen in der Fig. 1 nicht gesondert dargestellten elektrischen Stecker.

Über die lösbare Verbindung 4 kann das leitfähige Element 3 demontiert und damit bei Bedarf die einzelnen Teile des Füllstandsmessgeräts ausgetauscht werden. Gleichzeitig ist die lösbare Verbindung 4 durch die Anordnung im Innenraum 17 des Gehäuseteils 2 vor Korrosion geschützt. Es können beliebige Methoden zur Sicherung der lösbaren Verbindung 4 gegen unbeabsichtigtes Lösen angewendet werden, insbesondere auch solche, die bei direktem Kontakt der lösbaren Verbindung mit dem Füllgut wegen unzureichender chemischer Beständigkeit ausscheiden würden, wie klemmende Gewindebeschichtungen oder Sicherungsscheiben.

Die in Fig. 1 gezeigte Ausführungsform des TDR-basierten Füllstandsmessgerätes ist insbesondere für Anwendungen in der chemischen Industrie geeignet.

In Fig. 2 ist ein Querschnitt durch ein erfindungsgemäßes Füllstandsmessgerät 1 zu sehen. Bei dieser Ausgestaltung ist im Innenraum 17 zwischen dem leitfähigen Element 3 und dem Gehäuseteil 2 ein Isolationselement 11 angeordnet. Gegen den Prozess hin ist der Innenraum 17 über Prozessdichtungen 8, 9; 12 zum Prozess hin spaltfrei abgedichtet. Hierzu ist erfindungsgemäß zwischen dem Gehäuseteil 2 und dem Isolationselement 11 eine erste Prozessdichtung 9 und zwischen dem Isolationselement 11 und dem leitfähigen Element 3 eine zweite Prozessdichtung 8 frontbündig vorgesehen (siehe Fig. 2 auf der linken Seite). Alternativ zu dieser erfindungsgemäßen Ausführungsvariante kann auch eine frontbündige Formdichtung 12 zwischen dem leitfähigen Element 3 und dem Gehäuseteil 2 vorgesehen sein, wie dies in der Fig. 2 auf der rechten Seite gezeigt ist. Um eine dauerhafte spaltfreie Abdichtung des Innenraums 17 des Füllstandsmessgeräts 1 gegen den Prozess zu erreichen, werden die Prozessdichtungen 8, 9 bzw. die Prozessdichtung 12 mit einer definierten Vorspannung angepresst, die durch einen mechanischen Anschlag an der lösbaren Verbindung 4 erreicht wird. Besonders vorteilhaft ist bei der in Fig. 2 dargestellten Ausführungsform der erfindungsgemäßen Vorrichtung das lösbare Befestigungssteil bzw. der lösbare Flansch 10, der eine modulare Adaption des Füllstandsmessgeräts an verschiedene Prozessanschlüsse erlaubt. Im dargestellten Beispiel handelt es sich um eine Clamp-Verbindung nach ISO 2852, selbstverständlich sind hier auch Prozessanschlüsse nach anderen Industriestandards möglich. Im Gegensatz zu mit PTFE oder ähnlichen weichen Materialien plattierten Prozessanschlüssen nach dem Stand der Technik bei Verwendung vollisolierter Messsonden oder Messsonden mit Konusdichtung kann das lösbare Befestigungssteil bzw. der lösbare Flansch 10 aus Metall gefertigt werden und ist damit deutlich langlebiger und auch bei wechselnden Temperaturen dicht.

### Bezugszeichenliste

- 1: Füllstandsmessgerät
- 2: Gehäuseteil
- 3: leitfähiges Element
- 4: Steck-/Schraubverbindung
- 5: Isolationsscheibe
- 6: O-Ring
- 7: O-Ring
- 8: Prozessdichtung
- 9: Prozessdichtung
- 10: Befestigungsteil / Flansch
- 11: Isolationselement
- 12: Formdichtung
- 13: Steck-/Schraubverbindung
- 14: Elektronikteil
- 15: elektrischer Anschluss
- 16: Anschlag
- 17: Innenraum

## Patentansprüche

1. Füllstandsmessgerät zur Bestimmung und/oder Überwachung der Prozessgröße Füllstand eines Füllguts in einem Behälter, umfassend:
- ein Gehäuseteil (2) mit einem Innenraum (17), wobei das Gehäuseteil (2) an dem Behälter befestigbar ist,
- ein leitfähiges Element (3), das sich im montierten Zustand in den Behälter hineinerstreckt und das mit dem Gehäuseteil (2) über eine lösbare und wiederverschließbare Verbindung (4) gekoppelt ist, wobei die Verbindung (4) im Innenraum (17) angeordnet ist,
- ein Isolationselement (11), welches in einem definierten Bereich zwischen dem leitfähigen Element (3) und dem Gehäuseteil (2) angeordnet ist,
- eine erste Prozessdichtung (9), und
- eine zweite Prozessdichtung (8),
wobei die erste Prozessdichtung (9) zum Füllgut hin derart frontbündig zwischen dem Gehäuseteil (2) und dem Isolationselement (11), und die zweite Prozessdichtung (8) zum Füllgut hin derart frontbündig zwischen dem Isolationselement (11) und dem leitfähigen Element (3) angeordnet sind, dass der Innenraum (17) zum Füllgut hin spaltfrei abgedichtet ist, und
wobei das Füllstandsmessgerät den Füllstand des Füllguts über ein kapazitives Messverfahren oder über ein konduktives Messverfahren oder über die Laufzeit von an dem leitfähigen Element (3) entlang geführten hochfrequenten Messsignalen ermittelt.

2. Füllstandsmessgerät nach Anspruch 1,
wobei es sich bei der ersten Prozessdichtung (9) und der zweiten Prozessdichtung (8) um einen O-Ring handelt.

3. Füllstandsmessgerät nach Anspruch 1,
wobei es sich bei der lösbaren und wiederverschließbaren Verbindung (4) um eine Schraubverbindung oder um eine Steckverbindung handelt.

4. Füllstandsmessgerät nach zumindest einem der vorhergehenden Ansprüche,
wobei an dem Gehäuseteil (2) ein lösbares Befestigungsteil (10) zur Befestigung des Füllstandsmessgeräts an dem Behälter vorgesehen ist.

5. Füllstandsmessgerät nach nach zumindest einem der vorhergehenden Ansprüche, wobei eine lösbare Steck- und/oder Schraubverbindung (13) vorgesehen ist, über die ein Elektronikteil (14) an das Füllstandsmessgerät angekoppelt ist.

## Claims

1. Level transmitter to determine and/or monitor the process variable "level" of a medium in a vessel, comprising:
- a housing section (2) with an interior space (17), wherein said housing section (2) can be secured on the vessel,
- a conductive element (3) which, when mounted, extends into the vessel and which is coupled with the housing section (2) via a detachable and reclosable connection (4), wherein said connection (4) is arranged in the interior space,
- an isolation element (11), which is arranged in a defined area between the conductive element (3) and the housing section (2),
- a first process seal (9), and
- a second process seal (8),
the first process seal (9) being arranged towards the medium in a flush mount manner between the housing section (2) and the isolation element (11), and the second process seal (8) being arranged towards the medium in a flush mount manner between the isolation element (11) and the conductive element (3) in such a way that the interior space (17) is sealed off from the medium without any gaps, and
wherein the level transmitter determines the level of the medium using a capacitive measuring method or using a conductive measuring method or using the transit time of high-frequency measuring signals guided along the conductive element (3).

2. Level transmitter as claimed in Claim 1,
wherein the first process seal (9) and the second process seal (8) is an O-ring in each case.

3. Level transmitter as claimed in Claim 1,
wherein the detachable and reclosable connection (4) is a screw connection or a plug-in connection.

4. Level transmitter as claimed in at least one of the previous claims,
wherein a detachable fastening unit (10), designed to secure the level transmitter to the vessel is provided on the housing section (2).

5. Level transmitter as claimed in at least one of the previous claims,
wherein a detachable plug-in connection and/or screw connection (13) is provided, via which an electronic part (14) can be connected to the level transmitter.

## Revendications

1. Transmetteur de niveau destiné à la détermination et/ou la surveillance de la grandeur de process niveau d'un produit dans un réservoir, comprenant :
- une partie de boîtier (2) avec un espace intérieur (17), la partie de boîtier (2) pouvant être fixée à un réservoir,
- un élément conducteur (3) qui, à l'état monté, s'étend à l'intérieur du réservoir et qui est couplé avec la partie de boîtier (2) via une connexion (4) amovible et refermable, la connexion (4) étant disposée dans l'espace intérieur,
- un élément d'isolation (11), lequel est disposé dans une zone définie entre l'élément conducteur (3) et la partie de boîtier (2),
- un premier joint de process (9), et
- un deuxième joint de process (8),
le premier joint de process (9) étant disposé, par rapport au produit, de façon affleurante entre la partie de boîtier (2) et l'élément d'isolation (11), et le deuxième joint de process (8) étant disposé, par rapport au produit, de façon affleurante entre l'élément d'isolation (11) et l'élément conducteur (3), de sorte que l'espace intérieur soit isolé sans intervalle par rapport au produit, et
le transmetteur de niveau déterminant le niveau du produit au moyen d'un procédé de mesure capacitif ou d'un procédé de mesure conductif ou par le biais du temps de parcours de signaux de mesure haute fréquence guidés le long de l'élément conducteur (3).

2. Transmetteur de niveau selon la revendication 1,
pour lequel il s'agit, concernant le joint de process (9) et le joint de process (8), d'un joint torique.

3. Transmetteur de niveau selon la revendication 1,
pour lequel il s'agit, concernant la connexion (4) amovible et refermable, d'une connexion vissée ou d'une connexion enfichable.

4. Transmetteur de niveau selon au moins l'une des revendications précédentes, pour lequel est prévue, sur la partie de boîtier (2), une pièce de fixation (10) amovible destinée à la fixation du transmetteur de niveau sur le réservoir.

5. Transmetteur de niveau selon au moins l'une des revendications précédentes, pour lequel est prévue une connexion enfichable et/ou vissée (13) amovible, par l'intermédiaire de laquelle un module électronique (14) peut être couplé au transmetteur de niveau.
